# EUROPÄISCHE PATENTSCHRIFT

(11) **EP 1 304 200 B1**
(45) Veröffentlichungstag und Bekanntmachung des Hinweises auf die Patenterteilung: **22.07.2009**
(21) Anmeldenummer: 02020600.9
(22) Anmeldetag: 18.09.2002
(51) Int. Cl.: B29B 9/06, B29C 47/30, B30B 11/26, B30B 15/02

(54) **Verfahren und Vorrichtung zur definierten Zerkleinerung von Polymerisatgelen**
Method and apparatus for defined cutting of polymeric gels
Procédé et dispositif pour reduire en morceaux des gels polymeres

(30) Priorität: 16.10.2001 AT 16302001
(43) Veröffentlichungstag der Anmeldung: 23.04.2003
(73) Patentinhaber: DSM Fine Chemicals Austria Nfg GmbH & Co KG, 4021 Linz (AT)
(72) Erfinder: Schoppel, Gerhard, Dr., 4641 Steinhaus b. Wels (AT); Haeubl, Georg, Dr., 4040 Linz (AT); Wagner, Marion, Dipl.-Ing., 4223 Katsdorf (AT); Kirsch, Helmuth, Ing., 4600 Wels (AT); Schulz, Erich, 4052 Ansfelden (AT); Summer, Gerald, 4020 Linz (AT)
(74) Vertreter: Habets, Winand

(56) Entgegenhaltungen:
- CH-A- 507 739
- DE-C- 19 518 645
- FR-A- 2 331 438
- US-A- 3 106 747
- US-A- 3 562 234
- US-A- 3 797 982
- US-A- 4 884 960
- PATENT ABSTRACTS OF JAPAN vol. 004, no. 132 (M-032), 17. September 1980 (1980-09-17) & JP 55 090310 A (YOKOHAMASHI;OTHERS: 01), 8. Juli 1980 (1980-07-08)

## Beschreibung

Die Erfindung betrifft eine Vorrichtung zur Zerkleinerung von Polymerisatgelen zur Erzielung einer definierten, einheitlichen Teilchengröße mit einer aus einem statischen und gegebenenfalls einem dynamischen Schneideelement bestehenden Schneideeinheit unter formstabiler Zuführung des Polymerisatgels zu derselben und ein Verfahren zur Durchführung der Zerkleinerung.

Wasserhaltige Polymerisatgele werden aus wasserlöslichen Monomeren bei der Herstellung von wasserlöslichen oder wasserquellbaren Polymerisaten erhalten und kommen in den unterschiedlichsten Gebieten zur Anwendung. Sie werden beispielsweise als Flockungshilfsmittel, Entwässerungs- und Retentionsmittel, als viskositätserhöhende Mittel in wässrigen Medien, beispielsweise bei der tertiären Erdölgewinnung, als Mahl- oder Dispergierhilfsmittel, Klebemittel, Abwasserbehandlungsmittel, als Superabsorber im Hygiene- und Sanitärbereich oder als Bodenverbesserer in der Landwirtschaft, als Abdichtungsmittel in der Bauindustrie, sowie bei der Herstellung von strom- und lichtleitenden Kabeln oder in der Medizin, beispielsweise zur Senkung des Cholesterinspiegels durch Bindung der Gallensäuren bzw. von Gallensäuresalzen oder bei der Behandlung von Dialyse- und Prädialysepatienten zur Bindung von Phosphaten eingesetzt.
Die Herstellung der Polymerisate bzw. Polymerisatgele, beispielsweise von Acryl- und Allylpolymeren, wie Acrylsäure-, Methacrylsäure-, Hydroxyethylmethacrylsäure- und Acrylamidhomopolymere bzw. deren Derivate und Copolymere aus einem größeren Anteil an Acrylsäure-, Methacrylsäure-, Hydroxyethylmethacrylsäure- und Acrylamidderivaten und anderen copolymerisierbaren bzw. vernetzenden Monomeren, von Polymerisatgelen auf Basis nativer oder chemisch modifizierter Proteine (z.B. Gelatine und deren Derivate) bzw. von Polymerisatgelen auf Basis von natürlichen bzw. chemisch modifizierten Homo- und Heteropolysacchariden, wie z.B. Stärke und Cellulose, Agarose, Carageenan, Chitosan, Xanthan, Guargum, Alginat, Pektinat, Saccharosegele, sowie von Polymerisatgelen auf Basis von Polyelektrolyt-Saccharosegele, sowie von Polymerisatgelen auf Basis von Polyelektrolyt-Komplexen, wie etwa Cu-Alginat, von Polymerisatgelen auf Basis hydrolysierter vernetzter Maleinsäureanhydrid-Copolymere (z.B. vernetzte hydrolysierte, teilneutralisierte MSA-Methylvinylether-copolymere oder MSA-Styrolcopolymere), von N- bzw. Amino- oder Ammoniumgruppen-haltigen Polymeren mit kationischen Gruppen und geeigneten Gegenionen, die gegebenenfalls hydrophobe Gruppen enthalten können, erfolgt im allgemeinen durch Polymerisation in Masse, Suspensionspolymerisation, Emulsionspolymerisation oder Lösungspolymerisation, wie etwa in EP-A1-068 189, EP-A1-0 415 141, EP-A-0 374 709, WO 00/38664, WO 99/33452, WO 99/22721, WO 98/43653, US 5,496,545, EP-A1-0 366 986 u.s.w. beschrieben.

Die Polymerisatgele können dabei auf 2 verschiedenen Wegen hergestellt werden.
a) Durch Polymerisation und partielle Vernetzung in einem einzigen Schritt.
b) Durch nachträgliche Vernetzung eines synthetischen oder natürlichen Polymeren bzw. deren Derivaten.

Nach der gemäß dem Stand der Technik durchgeführten Polymerisationreaktion wird im Anschluss daran eine entsprechende Vernetzung (Gelierung) durchgeführt. In Abhängigkeit von den eingesetzten Monomeren und Vernetzern bzw. den Polymerisationsparametern werden wasserhaltige, im Zustand weiche, zähelastische (gummiartige) oder spröde, extrem scherempfindliche Polymerisatgele erhalten.
Die Verarbeitung dieser Polymerisatgele zu Pulvern erfolgt in den anschließenden Verfahrens- bzw. Aufarbeitungsschritten, wie etwa Grobzerkleinerung, Feinzerkleinerung, polymeranaloge chemische Umsetzung, Waschung, Separation, Trocknung und Mahlung u.s.w. und erforderte bisher einen erheblichen Aufwand, sofern die im Gelzustand erreichten Polymerisateigenschaften, wie etwa Quelleigenschaften und Teilchenstruktur, und damit im Zusammenhang stehende verfahrenstechnische Eigenschaften, wie etwa chemische Umsetzbarkeit, Sedimentierbarkeit, Filtriergeschwindigkeit, Trocknungsgeschwindigkeit und Mahlbarkeit, erhalten bleiben sollten. So wurde, wie etwa in WO 96/36464 beschrieben, die hierzu erforderliche Gleichmäßigkeit des Verfahrensablaufes bereits durch die Vorzerkleinerung und Zerkleinerung der weichen, zähelastischen oder spröden Gele behindert, da zähelastische Gelblöcke oder Gelstränge beispielsweise in Knetern in ungleichmäßig große Stücke zerissen, während bei der Zerteilung weicher Gele mit zunehmender Plastizität Gelteile mit immer größeren Dimensionen erzeugt werden und wobei die Knetwerkzeuge oft durch aufgewickelte Gelteile blockiert werden. Hieraus resultiert ein ungleichmäßiger Materialfluss, der zu unterschiedlichen Schichtdicken beispielsweise bei der Siebbandtrocknung und damit zu einer nicht ausreichenden oder zu starken Trocknung des Polymerisats unter Beeinträchtigung des nachfolgenden Mahl- und Klassifizierungsvorganges führt und wodurch andererseits, beispielsweise durch die Verhornung oder durch den teilweisen thermischen Abbaus des Polymerisates eine Verminderung der Qualität, zB. der Quellbarkeit, Entstehung von toxischen Gasen u.s.w., und damit ein Performance-Verlust des Produktes entsteht. Anstelle von Knetern werden im allgemeinen auch Extruder, wie z.B. ein Fleischwolf zum Zerkleinern von Polymerisatgelen verwendet, wobei das Gel mittels eines konisch sich verengenden Einschneckenfördersystem durch eine Lochplatte gepresst wird. Dieses System ist jedoch für druck- und scherempfindliche Polymerisatgele absolut ungeeignet, da das Gel auch bei eingebauten rotierenden Schneidmesser mehr zerschert als geschnitten wird, wodurch große Probleme bei der Waschung und der nachfolgenden Separation der Gele entstehen.
Aus der Literatur, beispielsweise aus DE 35 39 385, DE 35 06 534 oder WO 96/36464, sind weitere Zerkleinerungsverfahren bzw. -vorrichtungen bekannt, die jedoch entweder sehr aufwendig aufgebaut sind und/oder einen komplizierten bzw. aufwendigen Zerkleinerungsvorgang beinhalten oder die lediglich zum Grobzerteilen geeignet sind und in keinem Fall zu einer uniformen Partikelverteilung führen.

Die DE-A-19518645 beschreibt ein solches Verfahren zur Grobzerkleinerung von Polymergelen, wobei das Polymergel durch einander achsparallel zugeordnete Walzen geführt wird. Eine dieser Walzen ist als Schneidwalze ausgeführt. Derartig grob zerkleinerte Polymergele könnten der erfindungsgemäßen Vorrichtung zugeführt werden, um eine definierte Zerkleinerung, die Ziel der vorliegenden Erfindung ist, zu erhalten.

Aufgabe der vorliegenden Erfindung war es, eine neue Vorrichtung und ein Verfahren zum definierten Zerkleinern eines Polymerisatgeles, insbesondere von wasserhaltigen Polymerisatgelen, in einheitliche, bevorzugt kleine Teilchen, die im Vergleich zum Stand der Technik verbesserte Eigenschaften, wie bessere kontrollierte chemische Umsetzbarkeit, Waschbarkeit, Separierbarkeit, Filtrierbarkeit, Trocknungseigenschaften, Mahlbarkeit, bei geringerem Feinanteilsverlust bei den jeweiligen Separier- und Verfahrensschritten aufweisen.

Die Aufgabe konnte unerwarteterweise durch eine Vorrichtung gelöst werden, die aus zwei bzw. drei Hauptelementen, nämlich einem statischen Schneidelement, gegebenenfalls einem dynamischen Schneidelement und der Zuführung des Gel zu den Schneidelementen im eingespannten bzw. formstabilen Zustand, besteht.

Gegenstand der Erfindung ist demnach eine Vorrichtung zum definierten Zerkleinern von Polymerisatgelen, die dadurch gekennzeichnet ist, dass sie aus
a) einem statischen Schneidelement, bestehend aus gitterförmig angeordneten, gegebenenfalls unterstützten, vorgespannten Drähten, Stäben, Fasern, Geweben, Matrizen oder Profilen,
b) gegebenenfalls einem dynamischen Schneidelement zum Ablängen der mittels statischer Schneideeinheit erhaltenen Gelstränge oder -teilchen, bestehend aus einem oder mehreren gegebenenfalls unterstützten, geführten und gespannten Drähten oder Geweben und
c) einer Zuführungseinheit zur Zuführung des Polymerisatgels zu dem statischen Schneidelement im eingespannten, formstabilen Zustand, wobei die Zuführung sowohl diskontinuierlich oder kontinuierlich erfolgen kann,
aufgebaut ist.

Die erfindungsgemäße Vorrichtung besteht aus zwei bzw. drei Hautelementen.
Das erste Hauptelement ist die statische gitterförmige Schneideeinheit, die aus gegebenenfalls unterstützten, vorgespannten Drähten, Stäben, Fasern, Geweben, Matrizen oder Profilen besteht.
Geeignete Drähte, Stäbe, Fasern, Geweben, Matrizen oder Profilen können sowohl aus anorganischem Material, wie etwa aus gegebenenfalls beschichtetem, lackiertem Metall, z.B. aus legierten oder unlegierten Stählen und Edelstählen, Eisen, Aluminium, Kupfer, Tantal, oder aus Glas, Kohle, Keramik, Bor, wie Glasfaser, Kohlefasern, Keramikfasern und Borfasern u.s.w., als auch aus polymerem organischen Material, sowohl synthetischer, teilsynthetischer als auch natürlicher Herkunft, wie etwa aus Polyethylen (z.B.: UHMW-PE), Polypropylen, Polyestern, Polyamiden, Aramid, Polyetheretherketonen (PEEK), Polysulfonen, Polytetrafluoethylen, Cellulose u.s.w. bestehen.
Bevorzugt werden Metalldrähte, -stäbe, -gewebe oder -profile, oder hochfeste Kunststofffasern eingesetzt. Besonders bevorzugt sind Drähte, Stäbe, Geweben, Matrizen oder Profilen aus Edelstahl, Federstahl oder Fasern aus Polyethylen (z.B.: Dyneema ®; UHMW-PE) und Aramid (z.B.: Kevlar).
Die Form bzw. der Querschnitt der Drähte und Stäbe kann rechteckig, quadratisch, dreieckig, sechseckig oder rund sein. Bevorzugt weisen die eingesetzten Drähte und Stäbe einen quadratischen, dreieckigen oder runden Querschnitt und besonders bevorzugt einen runden Querschnitt auf. Auch eine Kombination der Geometrien ist möglich (quadratisch mit dreieckig oder rund mit dreieckig). Die Drähte und Stäbe können aber auch ein- oder beidseitig abgeflacht oder angeschrägt (zugespitzt) sein. Der Durchmesser bzw. die Dicke der Drähte und Stäbe liegt zwischen 0,05 und 10mm, bevorzugt zwischen 0,08 und 6mm und besonders bevorzugt zwischen 0,1 und 2,5mm.
Bei dem statischen Schneidelement sind die Drähte, Stäbe oder Fasern derart angeordnet, dass ein Gitter erhalten wird, bei welchem die Gitterzwischenräume bzw. die Maschenweite mit den gewünschten Formen und Dimensionen, insbesondere dem Querschnitt der zerkleinerten Gelteichen korrelieren. Die Gitterzwischenräume können dreieckig, quadratisch, rhomboedrisch, trapezförmig oder rechteckig sein, bevorzugt sind jedoch quadratische Zwischenräume. Erfindungsgemäß weisen die Zwischenräume eine Seitenlänge von 0,1 bis 200mm, bevorzugt von 0,2 bis 100mm und besonders bevorzugt von 0,4 bis 10mm auf, wodurch Gelteichen mit einem den gewählten Dimensionen der Gitterzwischenräume entsprechendem Durchmesser erhalten werden.

Werden für das Gitter Drähte oder Fasern verwendet, so ist es von Vorteil, wenn diese entsprechend vorgespannt werden (bei Metalldrähten bis zur Streckgrenze), damit eine definierte einheitliche Schneidgeometrie entsteht.
Die Drähte, Stäbe und Fasern des Gitters können unverbunden oder mittels Webung, Umschlingung, Klebung, Sinterung, Laserschweißung u.s.w. verbunden sein.

Anstelle von Drähten, Stäben oder Fasern kann das statische Schneidelement auch aus einem Gewebe oder einer Matrize bzw. einem Profil bestehen.
Geeignete Matrizen oder Profile bestehen bevorzugt aus Metall und können durch Stanzung, Ätzung, Laserbearbeitung u.s.w. hergestellt werden.
Die Matrizen-Zwischenräume können neben quadratisch, dreieckig, rhomboedrisch, trapezförmig, auch rund und bevorzugt sechseckig wabenförmig angeordnet sein, wodurch sich Vorteile hinsichtlich der Teilchenuniformität ergeben.

Die Dimensionen der Zwischenräume werden wie bei der Verwendung von Drähten, Stäben oder Fasern gewählt.

Bevorzugt werden für das statische Schneidelement Drähte, Maschengewebe oder Stäbe, besonders bevorzugt Drähte und Maschengewebe, eingesetzt.

Die Anordnung des statischen Schneidelements kann prinzipiell horizontal als auch vertikal erfolgen.

Das statische Schneidelement kann gegebenenfalls noch mit einer Unterstützungsvorrichtung ausgestattet sein. Dies ist insbesondere bei Verwendung von Drähten, Fasern oder Geweben zur Erzielung einer besseren Stabilität von Vorteil.
Die Unterstützung kann dabei in Form eines gegenseitig sich versteifenden Gitterrostes oder eines groben Drahtgewebes oder in Form eines Gitters, das auch als Siebgewebe ausgebildet sein kann, realisiert werden. Bevorzugt wird ein Gitterrost als Unterstützung des statischen Schneidelements verwendet.

Bevorzugt ist die Unterstützungsvorrichtung an der dem statischen Schneidelement zugewandten Seite abgerundet, damit es zu keinem Drahtbruch infolge Kerbwirkung zwischen statischem Schneidelement und Unterstützungsgitterrost kommen kann.
Die Dimensionen dieser Unterstützungsvorrichtung sind abhängig von der Größe des statischen Schneidelements. Die Stärke dieser Unterstützungsvorrichtung ist abhängig von den aufzubringenden Schneidkräften des zu schneidenden Gels (Gelhärte) und vom Durchmesser des zu unterstützenden Gitters bzw. Gewebes. Z.B. kann bei einem Durchmesser von 800 mm der Unterstützungsgitterrost 80 mm betragen. Der Unterstützungsgitterrost ist ebenfalls bevorzugt aus Metall, besonders bevorzugt aus Edelstahl und kann aus Festigkeitsgründen gegebenenfalls in einen Ring eingeschweißt werden. Bei einer bevorzugten Ausführungsform sind die Stege zur Hälfte eingeschnitten und ineinander gesteckt und werden besonders bevorzugt aus Steifigkeitsgründen mittels Schweißung verbunden.
Die Unterstützungsvorrichtung wird dabei direkt nach dem statischen Schneidelement angebracht, sodass eine ausreichende Stabilisierung desselben, bei gleichzeitiger Beibehaltung der Formstabilität des Polymergels, während der Zerkleinerung der Gele gewährleistet wird. Bei Vorhandensein einer Gitterrostunterstützung bewirkt die formstabile Gelführung eine ähnlich saubere Schnittqualität, wie dies bei der Direktschneidung unmittelbar unter oder neben dem statischen Schneidelement der Fall ist. Dies trifft im besonderen für kleinere Schneidquerschnitte zu, wo wegen der geringen Durchbiegung kein Unterstützungsgitter notwendig ist.

Auf das gegebenenfalls unterstützte statische Schneidelement folgt als zweites Hauptelement ein dynamisches Schneidelement, das zum Ablängen der mittels statischem Schneidelement erhaltenen Gelstränge bzw. -teilchen dient. Sollen die Gelstränge jedoch nicht weiter geschnitten werden, so wird das dynamische Schneidelement nicht benötigt.
Erfindungsgemäß besteht die dynamische Schneideeinheit aus einem oder mehreren geführten und gespannten Drähten oder Fasern oder aus Geweben, die zwecks Verbesserung der Einheitlichkeit der Teilchenlänge besonders bei großen Durchmessern, auch unterstützt bzw. geführt sein können. Die Unterstützung verhindert ein Durchbiegen der Querschneidedrähte, was sich auf die Gleichmäßigkeit der Teilchenlänge besonders vorteilhaft auswirkt. Die Unterstützung kann dabei im einfachsten Fall aus einem in einem beweglichen Rahmen eingespannten gröberen Gewebe (z.B. Edelstahl- oder Kunststoffgewebe) bestehen. Die Unterstützung der Querschneidedrähte kann aber auch mittels mehrerer über die Einspannlänge verteilter Unterstützungsleisten, welche ebenfalls in einem entsprechenden beweglichen Rahmen eingespannt sind, erfolgen. Die Unterstützungsleisten besitzen bevorzugt Bohrungen, in welche durchbohrte Kunststoffbüchsen eingesetzt sind, durch welche die gespannten Querschneidedrähte durchgeführt werden. Die Kunststoffbüchsen bewirken eine etwas breitere Auflage für die Draht- bzw. Faserunterstützung und dadurch einen geringeren Draht- bzw. Faserverschleiß, wodurch die Standzeit des dynamischen Schneidelementes deutlich verbessert wird.

Das dynamische Schneidelement kann erfindungsgemäß ein gespannter Einzeldraht sein, der als rotierender, segmentweise rotierender oder hin- und herbewegender Drahtbügel angeordnet ist.
Eine weitere Ausführungsform des dynamischen Schneidelements besteht aus gespannten Drähten, die in einem rotierenden Speichenrad mit Nabe angeordnet sind.
Die Anzahl der Drähte richtet sich nach der Drehzahl des Schneidrades im Vergleich zur Vorschubgeschwindigkeit.
Die gespannten Drähte können in einer anderen Ausführungsform auch in einem Gatterrahmen angeordnet sein, der sich im Betrieb hin und her bewegt. Hier ist es von Vorteil, wenn die Drähte mit zusätzlichen Stegen zwecks Führung und Unterstützung ausgestattet sind.
Eine vierte Ausführungsvariante ist ein grob gespanntes Siebgewebe, das in einem Gatterrahmen hin- und herbewegt wird.
Die für das dynamische Schneidelement verwendeten Drähte, Fasern und Gewebe können sowohl wiederum aus anorganischem Material, wie etwa aus gegebenenfalls beschichtetem, lackiertem Metall, z.B. aus legierten oder unlegierten Stählen und Edelstählen, Eisen, Aluminium, Kupfer, Tantal, oder aus Glas, Kohle, Keramik, Bor, wie Glasfaser, Kohlefasern, Keramikfasern und Borfasern u.s.w., als auch aus polymerem organischen Material, sowohl synthetischer, teilsynthetischer als auch natürlicher Herkunft, wie etwa aus Polyethylen (z.B.: UHMW-PE), Polypropylen, Polyestern, Polyamiden, Aramid, Polyetheretherketonen (PEEK), Polysulfonen, Polytetrafluöethylen, Cellulose u.s.w. bestehen.
Bevorzugt werden Metalldrähte oder -gewebe oder hochfeste Kunststofffasern eingesetzt. Besonders bevorzugt sind Drähte oder Geweben aus Edelstahl, Federstahl oder Fasern aus Polyethylen (z.B.: Dyneema ®; UHMW-PE) und Aramid (z.B.: Kevlar).

Das dynamische Schneidelement ist bei der erfindungsgemäßen Vorrichtung immer im rechten Winkel zur Auspressrichtung des statischen Schneiders angeordnet, wobei für ein optimales Schnittbild zwei weitere Punkte bevorzugt zu beachten sind.
So soll der Abstand des dynamischen Schneidelements zum statischen Schneidelement bevorzugt so gering als möglich sein. Der Abstand beträgt daher in den bevorzugten Ausführungsvarianten bevorzugt maximal 10mm und besonders bevorzugt maximal 2mm. Größere Abstände können ebenfalls gewählt werden, sind jedoch im Hinblick auf die Erzielung eines optimalen Schnittbildes von Nachteil. Eine Alternative, die größere Abstände zwischen dynamischem und statischem Schneidelement bei gleichzeitig optimalem Schnittbild ermöglicht, besteht darin, dass die mit dem statischen Schneidelement geschnittenen Teilchen formstabil in einem eingespannten sich selbst versteifenden Gitterrost zum dynamischen Schneidelement, das unmittelbar am Gitterrostende platziert ist, weitergeführt werden.
Als zweiter wichtiger Punkt ist die Schnittgeschwindigkeit des dynamischen Schneidelements zu beachten. Je schneller die Schnittgeschwindigkeit der dynamischen Schneideeinheit ist, umso weniger können sich die weichen und biegsamen Teichen beim Schneiden wegbiegen bzw. ausweichen. Je höher somit die Schnittgeschwindigkeit des dynamischen Schneidelements im Verhältnis zur Vorschubgeschwindigkeit des Polymerisatgeles ist, desto besser ist die Schnittqualität.

Das Verhältnis der Schnittgeschwindigkeit des dynamischen Schneidelements zur Vorschubgeschwindigkeit der Gelstränge hat dabei Einfluss auf die Form und die Gleichmäßigkeit der geschnittenenTeilchen. Dies ist insbesondere bei der Gatterausführung (Hin- und Herbewegung) der dynamischen Schneideeinheit der Fall.
Die Schnittgeschwindigkeit der dynamischen Schneideeinheit ist bei der erfindungsgemäßen Vorrichtung bevorzugt mindestens gleich schnell wie oder schneller als die Vorschubgeschwindigkeit des Polymerisatgeles bzw. der Gelstränge. Bevorzugt ist ein Verhältnis von Schnittgeschwindigkeit zu Vorschubgeschwindigkeit von mindestens 2:1, besonders von mindestens 10:1. Langsamere Schnittgeschwindigkeiten können auch gewählt werden, wirken sich jedoch nicht vorteilhaft auf das Schnittbild aus.

Das dritte Hauptelement ist die Zuführungseinheit, mittels der das zu schneidende Polymerisatgel dem statischen Schneidelement zugeführt wird, wobei die Zuführung im formstabilen, eingespannten Zustand gewährleistet wird.
Diese formstabile Zuführung kann diskontinuierlich oder kontinuierlich erfolgen.
Bei der diskontinuierlichen Variante erfolgt die Zuführung des Polymerisatgeles zu den Schneidelementen über eine verschließbare Lade mittels einer horizontalen Stempelauspressvorrichtung. Dazu wird das Gel zuerst grob in Blöcke vorgeschnitten, worauf diese dann in die Lade chargiert werden. Durch einen Hebel wird der Vorderteil der Lade beim Befüllen verschoben d.h. vergrößert, sodass der Befüllvorgang der Lade dadurch erleichtert wird. Die Lade wird oben mit einem messerartigen Schieber (Blade) verschlossen und der vordere Teil der Lade so weit vorgeschoben, dass eine leichte Seitenpressung entsteht, die die Vorwärtsbewegung des rechteckigen Pressstempels nicht behindert, aber trotzdem ein abgeschlossener Raum gebildet wird. Die Gelpolymerisat-Blöcke werden dadurch im eingespannten, formstabilen Zustand den Schneidelementen zugeführt.

Eine weitere, bevorzugte diskontinuierliche Variante beinhaltet das Auspressen des Polymerisatgeles aus einem rohrförmigen Behälter, in dem die Herstellung des Polymerisatgeles bzw. die Vernetzung der Polymere erfolgt.
Der Behälter weist dabei einen abnehmbaren Deckel und einen abnehmbaren Boden mit entsprechenden Dichtungen auf. Bei der Zuführung des Behälters zur Schneideeinheit wird zuerst der Deckel entfernt. Die Entfernung des Bodens erfolgt bevorzugt dadurch, dass der Behälter über einen Zentrierflansch gefahren wird. Bevorzugt wird der Boden des Behälters dabei über eine Abscherkante, beispielsweise aus Kunststoff, bevorzugt aus Teflon, oder über eine kunststoffbeschichtete oder -belegte, bevorzugt mit Teflon beschichtete oder -belegte, Abscherkante gedrückt, wodurch der Behälterboden vor der Abscherkante liegen bleibt und der Behälter gleichzeitig auf den Zentrierflansch geschoben wird, sodass die Polymerstruktur des Geles nicht zerstört wird. Damit die untere Behälterdichtung, bevorzugt eine Schwalbenschwanzdichtung, nicht beschädigt wird, wird der Behälter während des Abscherens des Behälterbodens bevorzugt mittels am Behälter angebrachter seitlichen Rollen und entsprechenden Führungsschienen leicht angehoben und beim Erreichen des Zentrierflansches wieder auf diesen abgesenkt. Mit dem Auspressen des Polymerisatgeles kann begonnen werden, wenn sich der Behälter auf dem Zentrierflansch, der zentrisch über dem statischen Schneidelement angeordnet ist, befindet und eine Fixierung des Behälters beispielsweise mittels Spannzangen, die beispielsweise elektromagnetisch, hydraulisch oder pneumatisch angetrieben werden, erfolgt ist.
Das Auspressen erfolgt bei dieser erfindungsgemäßen Variante mittels eines Pressstempels, der zentriert in den Behälter mit der gewünschten Vorschubgeschwindigkeit eingebracht wird. Um ein zentriertes Einfahren in den Behälter zu gewährleisten, wird der Pressstempel bevorzugt in einem Kugelkopf gelagert, sodass eine Beweglichkeit nach allen Seiten gegeben ist und der Stempel durch das Eigengewicht in die lotrechte Position fällt. Weiters weist der Behälter bevorzugt eine zentrische Anschrägung auf, die ebenfalls das zentrische Einführen des Pressstempels erleichtert.

Die Zuführung des Polymerisatgeles kann jedoch auch kontinuierlichen erfolgen. Dies ist insbesondere der Fall, wenn die Herstellung des Polymerisatgeles in kontinuierlicher Weise in einem Rohrreaktor, beispielsweise analog EP-0 374 709, erfolgt. Durch die geschlossene Fahrweise ergibt sich bei der kontinuierlichen Zuführung ein großer Vorteil bezüglich Produkt- und Arbeitshygiene.

Bevorzugte Kombinationen bei der erfindungsgemäßen Vorrichtung bestehen aus
a) einem liegend angeordneten Pressstempel (Pressvorrichtung), einer Lade, einem statischen Schneidgitter und einem Schneidrad
b) einem stehend bzw. hängendem Pressstempel, einem Behälter in dem die Herstellung des Polymerisatgeles erfolgt, einem statischen Schneidgitter und der Gatterausführung des dynamischen Schneidelementes oder
c) für die kontinuierliche Ausführung aus einem kontinuierlichem Rohrreaktor mit statischem Schneidgitter, gegebenenfalls mit Unterstützungsgitterrost und einem Schneidrad oder
d) für die kontinuierliche Ausführung aus einem kontinuierlichem Rohrreaktor mit statischem Schneidgitter, gegebenenfalls mit Unterstützungsgitterrost und der Gatterausführung des dynamischen Schneidelementes

Als weitere Lösung der oben genannten Aufgabe wird erfindungsgemäß ein Verfahren zur definierten Zerkleinerung von Polymerisatgelen, bevorzugt von wasserhaltigen Polymerisatgelen, vorgeschlagen, das dadurch gekennzeichnet ist, dass das Polymerisatgel direkt nach der Polymerisation bzw. Vernetzung des Polymeren mit der erfindungsgemäßen Vorrichtung zu Polymerisatgelteilchen einheitlicher Größe geschnitten wird.
Dazu wird das Gel durch die Zuführeinheit in einem formstabilen, eingespannten Zustand dem statischen Schneideiement zugeführt und mit der gewählten Vorschubgeschwindigkeit durch dieselbe gedrückt. Die dadurch erhaltenen Gelstränge werden sodann gegebenenfalls durch das dynamische Schneidelement in Abhängigkeit von der gewählten Schnittgeschwindigkeit in einheitliche Teilchen mit den gewünschten Dimensionen (Länge) geschnitten.

Durch die erfindungsgemäße Vorrichtung und das erfindungsgemäße Verfahren werden die Polymerisatgele definiert zerkleinert und einheitliche Teilchen, die im Vergleich zum Stand der Technik verbesserte Eigenschaften, wie bessere Waschbarkeit, kontrollierte chemische Umsetzbarkeit, Separierbarkeit, Filtrierbarkeit, Trocknungseigenschaften, Mahlbarkeit, bei geringerem Feinanteilsverlust bei den jeweiligen Separier- und Verfahrensschritten aufweisen.
Bei den erfindungsgemäß erhaltenen Teilchen handelt es sich um prismatische Teilchen mit bevorzugt quadratischer Geometrie oder um zylindrische Teilchen. Die Länge der Prismen bzw. Zylinder kann von 0,1mm bis zur natürlichen Bruchlänge variieren. Bevorzugt liegt die Schnittlänge jedoch zwischen 0,2 und 100mm und besonders bevorzugt zwischen 0,4 und 10mm. Der Durchmesser der Teilchen ergibt sich wie oben beschrieben durch die Abmessungen des Gitters bzw. der Gitterzwischenräume des statischen Schneidelements und beträgt 0,1 bis 200mm, bevorzugt 0,2 bis 100mm und besonders bevorzugt 0,4 bis 10mm.
Besonders bevorzugte besitzen die geschnittenen Teilchen eine würfelige Form oder weisen ein Verhältnis von Prismenhöhe bzw. Zylinderhöhe zum Prismendurchmesser bzw. Zylinderdurchmesser von 1:1 auf.

Die erfindungsgemäße Vorrichtung und das erfindungsgemäße Verfahren eignen sich für Polymerisatgele, bevorzugt für wasserhaltige Polymerisatgele, beispielsweise für Acryl- und Allylpolymere, wie Acrylsäure-, Methacrylsäure-, Hydroxyethylmethacrylsäure- und Acrylamidhomopolymere bzw. deren Derivate und Copolymere aus einem größeren Anteil an Acrylsäure-, Methacrylsäure-, Hydroxyethylmethacrylsäure- und Acrylamidderivaten und anderen copolymerisierbaren bzw. vernetzenden Monomeren, für Polymerisatgele auf Basis nativer oder chemisch modifizierter Proteine (z.B. Gelatine und deren Derivate) bzw. für Polymerisatgele auf Basis von natürlichen bzw. chemisch modifizierten Homo- und Heteropolysacchariden, wie z.B. Stärke und Cellulose, Agarose, Carageenan, Chitosan, Xanthan, Guargum, Alginat, Pektinat, Saccharosegele, sowie für Polymerisatgele auf Basis von Polyelektrolyt-Komplexen, wie etwa Cu-Alginat, für Polymerisatgele auf Basis hydrolysierter vernetzter Maleinsäureanhydrid-Copolymere (z.B. vernetzte hydrolysierte, teilneutralisierte MSA-Methylvinylether-copolymere oder MSA-Styrolcopolymere) und für N-bzw. Amino- oder Ammoniumgruppen-haltige Polymere mit kationischen Gruppen und geeigneten Gegenionen, die gegebenenfalls hydrophobe Gruppen enthalten können,
Geeignete Polymere bzw. Polymerisatgele sind beispielsweise aus EP-A1-068 189, EP-A1-0 415 141, EP-A-0 374 709, WO 00/38664, WO 99/33452, WO 99/22721, WO 98/43653, US 5,496,545, EP-A1-0 366 986 u.s.w. bekannt

Bevorzugt werden vernetzte, wässrige Polymerisatgele, besonders bevorzugt N-bzw. Amino- oder Ammoniumgruppen-haltige Polymeren mit kationischen Gruppen und. geeigneten Gegenionen, die gegebenenfalls hydrophobe Gruppen enthalten können, mit der erfindungsgemäßen Vorrichtung bzw. dem erfindungsgemäßen Verfahren geschnitten.

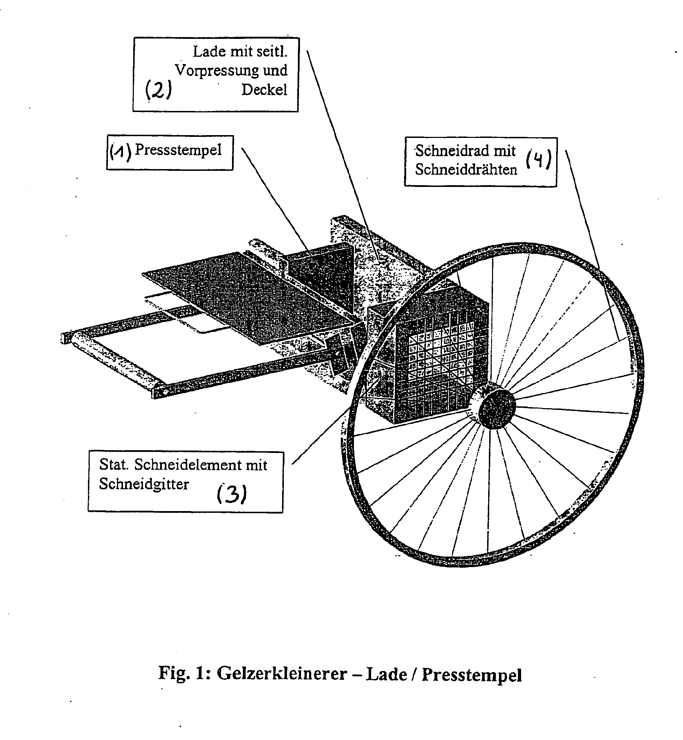

Ausführungsformen der erfindungsgemäßen Vorrichtung sind in den Figuren 1 bis 3 dargestellt und werden in Folge näher erläutert:
Fig. 1 zeigt eine perspektivische Darstellung einer erfindungsgemäßen Ausführungsform bestehend aus einem liegend angeordneten Pressstempel (Pressvorrichtung) (1), einer Lade mit seitlicher Vorpressung und Deckel (2), einem statischen Schneidelement mit Schneidgitter (3) und einem Schneidrad mit Schneiddrähten (4) als dynamisches Schneidelement.

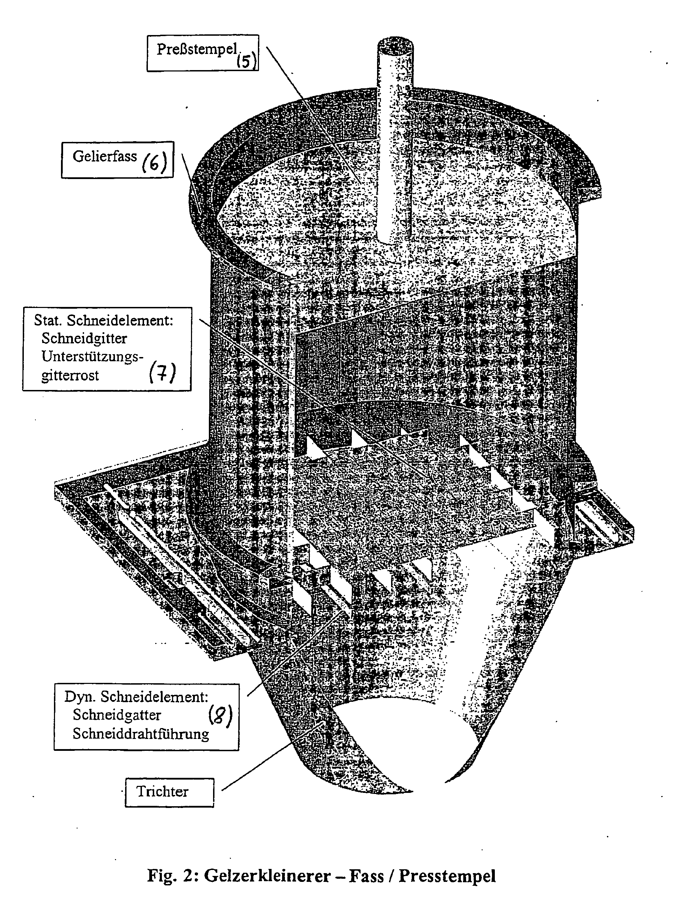

Fig. 2 zeigt eine perspektivische Darstellung einer weiteren erfindungsgemäßen Ausführungsform bestehend aus einem hängendem Pressstempel (5), einem Behälter in dem die Herstellung des Polymerisatgeles erfolgt (Gelierfass) (6), einem statischen Schneidelement mit Schneidgitter und Unterstützungsgitterrost (7) und dem dynamischen Schneidelement mit Schneidgatter mit Schneiddrahtführung (8).

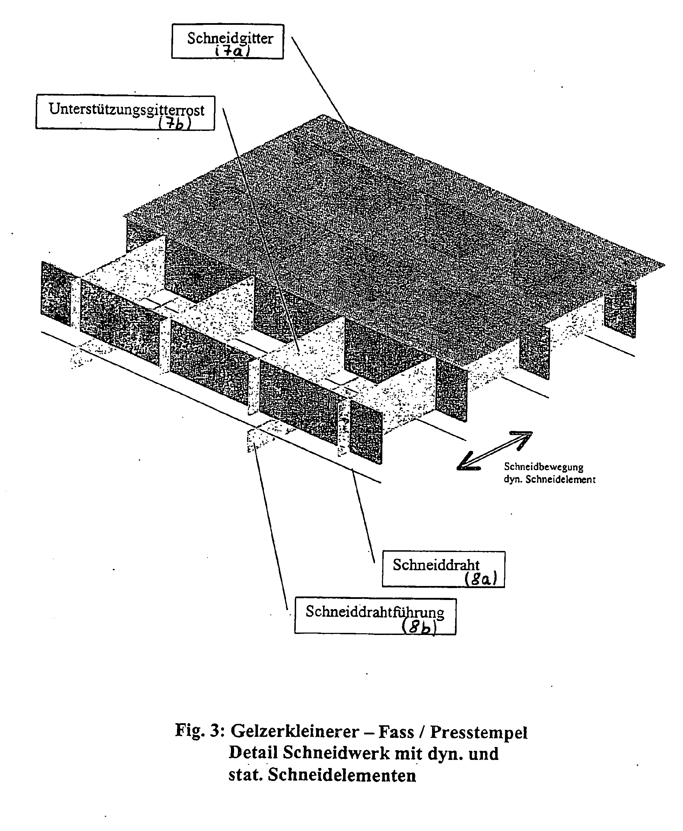

Fig. 3 zeigt eine perspektivische Detaildarstellung der Schneidelemente aus Fig.2, worin das Schneidgitter (7a) und der Unterstützungsgitterrost (7b) des statischen Schneidelements, sowie die Schneiddrähte (8a) mit der Schneiddrahtführung (8b) des dynamischen Schneidelementes gezeigt werden.

### Beispiel 1:

### a) Beschreibung des Polymerisatgels:

Für dieses Patentbeispiel wurde ein vernetztes, wässriges Polyallylamin verwendet: Dazu wurden 277 kg einer 19 %igen wässrigen Polyallylaminlösung (Molekulargewicht: 20000) mit 3,17 kg Epichlorhydrin bei einem pH-Wert von 10 und bei einer Reaktionstemperatur von 20 °C über einen Zeitraum von 30 Minuten gut homogenisiert. Anschließend wurde diese Mischung mind. 30 Stunden in einem Gelierbehälter bei Raumtemperatur aushärten gelassen. Es entstand ein extrem scherempfindliches Polymer, das sich mit Messern nicht ohne nennenswerte Produktion von Feinanteilen zerkleinern ließ.

### b) Schneidvorgang unter Verwendung einer Schneidvorrichtung gemäß Figur 1:

Es wurde dazu eine Maschine der Fa. TREIF, Type Mustang 100-CE mit einem für diese Zwecke geeigneten erfindungsgemäßen statischen und einem dynamischen Schneidelement adaptiert. Eine verschließbare Schneidkammer wurde mit dem oben beschriebenen vernetzten Polyallylamin (Polymersatgel) befüllt. Dazu war es notwendig, dass das Polymerisatgel entweder in dieser Form schon hergestellt wurde, oder in geeignete Blöcke entsprechend vorzerkleinert wurde. Die Befüllung der Lade erfolgte per Hand. Die mit Polymerisatgel befüllte Lade wurde anschließend mittels Hebelmechanismus und einem beweglichen Kunststoffblock, der die Aufgabe der seitlichen Abdichtung hat, verschlossen. Ein verschiebbarer zu einer Klinge ausgeformter Metallschieber verschloss die Einfüllöffnung nach oben. Der Schließdruck der Lade war einstellbar und konnte auf die Druckempfindlichkeit des Polymerisatgels abgestimmt werden. Eine Seite der Lade wurde durch den zurückgezogenen Pressstempel, der sich in der Ausgangsstellung befand, verschlossen. An der dem Pressstempel gegenüberliegende Seite befand sich das statische Schneidelement. Mit Hilfe des Pressstempels wurde das in der Lade eingeschlossene Polymerisatgel durch das statische Schneidelement (Schneidgitter) gepresst, dabei wurden die Polymerteilchen zu Endlossträngen geschnitten. Mit dem unmittelbar an das statische Schneidelement anschließenden dynamischen Schneidelement wurden jedoch keine Endlosstränge sondern sehr einheitliche Polymerteilchen geschnitten. Das statische Schneidelement bestand aus gespannten Einzeldrähten, die gekreuzt angeordnet waren. Die Spannung der Einzeldrähte erfolgte mit einer geeigneten Führung und mittels einer geeigneten Spannvorrichtung. Als dynamisches Schneidelement diente ein Speichenrad mit 24 gespannten Drähten. Die Drehzahl des Speichenrades war einstellbar, damit konnte je nach Vorschubgeschwindigkeit die Teilchenlänge eingestellt werden.

### c) Materialien und Schneideparameter:

Kolben aus Teflon; sonstige produktberührte Teile aus Edelstahl
Kolbenabmessung: 96 x 96 mm
Ladenabmessung: 96 x 96 x 550 mm
Länge des seitlichen Kunststoffblocks: 590 mm
Vorschubgeschwindigkeit: 30 mm/s

### Statisches Schneidelement:

Anzahl der gespannten Längsdrähte: 48 Stk.
Anzahl der gespannten Querdrähte: 48 Stk.
Drahtstärke: 0,5 mm
Drahtabstand: 1,5 mm (Maschenweite)
Anordnung der Drähte: Quadratisch
Abmessungen der lichten Weite des Schneidgitters: 96 x 96 mm
Drahtmaterial: 1.4571 (V-4A)

### Dynamisches Schneidelement: Speichenrad

Speichenraddurchmesser außen: 465 mm
Stegbreite des Außenrades: 11,5 mm
Lichte Schneiddrahtlänge: 183 mm
Nabendurchmesser außen: 77 mm
Drahtstärke: 0, 5 mm (1.4571)

Der Abstand zwischen statischem und dynamischem Schneidelement: betrug 1 mm Beurteilung des Schnittbildes: Würfelige Teilchengröße
Größe: ca. 1,5 mm; praktisch kein nennenswerter Feinanteil

Das so hergestellte zerkleinerte Polymerisatgel wurde mit der 2-fachen Gewichtsmenge an Methanol versetzt und anschließend 15 Minuten gerührt und die Sedimentierbarkeit und die Filtrierbarkeit qualitativ beurteilt. Die Ergebnisse sind in Tab. 1 zusammengefasst.

### Beispiel 2:

Zum Einsatz kam das in Beispiel 1 beschriebene vernetzte Polyallylamin, welches nach einer etwa 30 minütigen Rührzeit bei Raumtemperatur in noch flüssigem Zustand in einen rohrförmigen Behälter mit abnehmbaren Boden und Deckel eingefüllt wurde. Nach 30 Stunden Aushärtezeit wurde das Gel in der nachstehenden Apparatur gemäß Figur 2 zerkleinert.
Material des zylinderförmigen Behälters, des Bodens und des Deckels: Edelstahl (1,4571). Die Behälterinnenwand war elektropoliert und besaß eine mittlere Rauhtiefe von Ra < 0,5 µm.
Unmittelbar vor dem Auspressen des teilvernetzten wässrigen Polymerisatgels wurde der zylinderförmige Behälter mit dem entfernten Boden und Deckel über einem Zentrierflansch über dem Schneidwerk platziert.
Der Preßstempel bestand aus einem mit einer Teflonauflage versehenen Edelstahlplatte (Material 1,4571).

### Behälterdimension:

Innendurchmesser: 800 mm
Behälterlänge: 700 mm
Menge an Polymerisatgel: 280 kg
Abmessungen des statischen Schneidelementes:
Durchmesser: 800 mm
Maschenweite: 1,4 x 1,4 mm; Drahtstärke 0,45 mm (Fa. Haver & Boecker).
Gewebematerial: Edelstahl 1.4571

Dieses Maschengewebe wurde mit einem 2-Komponentenkleber auf einen Spannring aufgezogen und mit diesem verklebt. Weiters wurde das Maschengewebe mit einem Unterstützungsgitterrost unterstützt.

Dimensionen des Unterstützungsgitterrostes:
100 x 100 mm im Quadrat; Gitterrosthöhe: 80 mm

Dynamisches Schneidelement: Gatter mit 9 gespannten Längsdrähten, die 3 mal in der Mitte unterstützt geführt werden.
Gatterhublänge: 100 mm
Drahtstärke: 0,5 mm Material: Federstahldraht (1,4401)

### Schneidparameter:

Vorschubgeschwindigkeit des Pressstempels: 30 mm/min
Abstand zwischen Unterstützungsgitterrost und Schneidgatter: 1 mm
Schnittgeschwindigkeit: 100 mm/s

Beurteilung des Schnittbildes: Würfelige Teilchengröße
Teilchengröße 1,4 mm; praktisch kein nennenswerter Feinanteil

Das so hergestellte zerkleinerte Polymerisatgel wurde mit der 2-fachen Gewichtsmenge an Methanol versetzt und anschließend 15 Minuten gerührt und die Sedimentierbarkeit und die Filtrierbarkeit qualitativ beurteilt. Die Ergebnisse sind in Tab. 1 zusammengefasst.

### Beispiel 3:

Zum Einsatz kam ein analog Beispiel 1 vernetztes Polyallylamin, das jedoch mit dem 1,57-fachen Vernetzeranteil hergestellt wurde.
Dieses vernetzte Polymerisatgel wurde analog zu Beispiel 1 zerkleinert.
Das so hergestellte zerkleinerte Polymerisatgel wurde mit der 2-fachen Gewichtsmenge an Methanol versetzt und anschließend 15 Minuten gerührt und die Sedimentationsgeschwindigkeit und die Filtrationsgeschwindigkeit qualitativ beurteilt. Die Ergebnisse sind in Tab. 1 zusammengefaßt.

### Beispiel 4:

Es wurde das gleiche Polymer wie in Beispiel 1 und eine Schneidvorrichtung gemäß Firgur 2 verwendet.

Rohrförmiger Behälter mit abnehmbaren Boden und Deckel.
Preßstempel: Material 1,4571 versehen mit einer 20 mm dicken Polyamid-6.6 Platte. Behälterdimension:
Innendurchmesser: 800 mm
Oberflächengüte: elektropoliert, Rauhtiefe < 0,5 µm
Behälterlänge: 700 mm
Menge an Polymerisatgel: 340 kg

Abmessungen des Statischen Schneidgitters: Durchmesser: 800 mm
Maschenweite: 1,4 x 1,4 mm; Drahtstärke 0,28 mm (Fa. Haver & Boecker).
Gewebematerial: 1.4401

Unterstützungsgitter: Gitterrost 100 x 100 mm; Gitterrosthöhe: 80 mm
Dynamisches Schneidelement: Schneidgatter in beweglichem Rahmen, mit 9 gespannten Längsdrähten, die 3 mal in der Mitte unterstützt geführt wurden.
Gatterhublänge: 100 mm
Drahtstärke: 0,28 mm Material der Drähte: 1,4401

Schneidparameter:
Vorschubgeschwindigkeit des Pressstempels: 60 mm/min
Teilchenlänge: würfelförmig 1,4 mm
Schnittgeschwindigkeit des dynamischen Schneidgatters = 100 mm/s

Das so hergestellte zerkleinerte Polymerisatgel wurde mit der 2-fachen Gewichtsmenge an Methanol versetzt und anschließend 15 Minuten gerührt und die Sedimentierbarkeit und die Filtrierbarkeit qualitativ beurteilt. Die Ergebnisse sind in Tab. 1 zusammengefasst.

### Beispiel 5:

gleich wie Beispiel 2; jedoch mit einer Schnittlänge von 0,5 mm Länge.

### Beispiel 6:

Gleiche Ausführung wie Beispiel 2, jedoch mit einer Schnittlänge von 5 mm.

### Beispiel 7:

Gleiche Ausführung wie Beispiel 2, jedoch wurde als statisches Schneidelement ein gespanntes Kunststoffgewebe verwendet.
Material: Polypropylen (Hersteller: Fa. SEFAR/CH).
Type: Sefar Propyltex 05-3360/60; Quadratmaschengewebe
Abmessungen: w= 3,0 mm; d=1,0 mm, (w=Maschenweite; d=Faserstärke)

Schnittbild: würfelig, 3 mm; prakt. kein Feinanteil.

### Beispiel 8:

Gleiche Ausführung wie Beispiel 2, jedoch für das Schneidgatter eine UHMW-PE-Faser (Dyneema, Fa. DSM/NL) verwendet.

Schnittbild: würfelig, 1,4 mm; prakt. kein Feinanteil.

### Beispiel 9:

Gleich wie Beispiel 1, jedoch wurde als Polymerisatgel eine 5 Gew.%ige Carrageenan-Lösung verwendet, welche für 1 Minute aufgekocht wurde und anschließend auf Raumtemperatur abgekühlt wurde.

Schnittbild: würfelig, 1,5 mm; prakt. kein Feinanteil.

### Beispiel 10:

Gleich wie Beispiel 1, jedoch wurde als Polymerisatgel eine Acrylamidcopolymer verwendet. Die Herstellung dieses Polymerisatgels wurde analog EP 415 141 B1 hergestellt.
In einem 50 Liter Reaktor wurden bei 20 °C 15 kg deionisiertes Wasser vorgelegt und dann 12 kg 50 %ige (w/w) wässrige Acrylamidlösung und 4,3 kg 50 %ige (w/w) wässrige Acrylamidomethylpropansulfonsäure-Na-Lösung und anschließend 0,002 kg Methylenbisacrylamid zugegeben. Nach inniger Vermischung wurde mit Salzsäure auf einen pH-Wert von 5 eingestellt. Nach 30 Minuten Spülung mit Stickstoff, wurde die Polymerisation gestartet. Als Initiator wurden 0,5 g Na₂S₂O₅ und 1 g (NH4)₂S₂O₈ verwendet, welche in 1 kg Wasser dazugegeben wurde. Die Polymerisation wurde adiabatisch ausgeführt und war innerhalb von 2 Stunden beendet.
Dieses Gel wurde mit der Apparatur wie sie in Beispiel 1 beschrieben wurde zerkleinert.

### Beurteilung des Schnittbildes:

Teilchenlänge: 1,5 x 1,5 x 2 mm; praktisch kein Feinanteil.

### Beispiel 11: Kontinuierliche Polymerisation:

Die Polymerisation erfolgte analog zu dem in der EP 0 374 709 A2 beschriebenen Patentbeispiel 1.
Die im Beispiel 1 der EP 0 374 709 A2 beschriebene Monomerenmischung, Initiatorkombination und Trennflüssigkeit wurde verwendet.
Es wurde ein vertikales, teflonbeschichtetes Metallrohr mit 200 mm Durchmesser und 4 m Länge verwendet. Zu Beginn wurde der mit einer Teflonplatte verschlossene Rohrreaktor zur Hälfte mit Polymerlösung gefüllt und diese 2 Stunden unter adiabatischen Bedingungen polymerisiert. Danach wurde die Metallplatte entfernt und das Schneidwerk angekoppelt. Die Monomerlösung und die Initiatorlösung wurden getrennt mittels Dosierpumpen tangential in einer dynamischen Mischkammer mit einem schnell laufenden Rührer kontinuierlich homogenisiert und dann diese homogene Polymerisationslösung mit einer Hochdruckkolbenpumpe dem Rohrreaktor kontinuierlich zugeführt. Auf Grund der adiabatischen Reaktionsführung stieg die Temperatur auf ca. 80 °C an. Der Feed betrug 62 kg/Stunde.
Das statische Schneidwerk war ein zwischen zwei Flansche vorgespanntes und mit einem 2-Komponentensystem verklebtes Quadratmaschengewebe mit einer Maschenweite von 1,4 mm und einer Drahtstärke von 0,45 mm. Unterhalb des statischen Schneidgewebes wurde ein Kreuz (als einfachste Form des Gitterrostes) zur Unterstützung des statischen Schneidgewebes in das Rohr eingeschweißt. Die Dimension des Unterstützungskreuzes: Blechstärke 1,5 mm, oben gerundet, ineinander gesteckt und verschweißt; Höhe: 50 mm; ebenso verschweißt mit der Außenwand des Edelstahlrohres.
Abstand zwischen statischem und dynamischen Schneidelement: 1 mm
Der dynamischen Schneider wurde als rotierender Schneidbügel ausgeführt, welcher mit einer Drehzahl von 16 UpM betrieben wurde.
Das erhaltene geschnittene Polymerisatgel hatte praktisch keinen Feinanteil und die Abmessungen der prismatischen Teilchen betrugen 1,4 x 1,4 x 2 mm.

### Beispiel 12: Vergleichsbeispiel:

Das unter Beispiel 1 hergestellte Polymerisatgel wurde in einem Fleischwolf:
Type: W-130 Fa. LASKA zerkleinert.
Durchmesser der Lochscheibe: 130 mm
Das Polymerisatgel wurde mittels des Fleischwolfs durch eine Lochscheibe mit 3,5 mm großen Löchern durchgepresst.
Anzahl der Messer: 4 Stk.

### Beispiel 13:

### Bestimmung der Sedimentationsfähigkeit und der Filtrierbarkeit.

Die hergestellten zerkleinerten Polymerisatgele wurden mit der 2-fachen Gewichtsmenge an Methanol versetzt und anschließend 15 Minuten gerührt und die Sedimentationsfähigkeit sowie die Filtratierbarkeit qualitativ beurteilt. Die Ergebnisse sind neben der Teilchenform und Teilchendimension in Tab. 1 zusammengefasst.

### Vergleich der zerkleinerten Gelpolymerisate:

| **Bsp.-Nr.** | **Feinanteil** | **Teilchen- Abmessungen** | **Sedimentierbarkeit in MeOH** | **Wasch- und Filtrierbarkeit in MeOH** |
|---|---|---|---|---|
| 1 | prakt. kein Feinanteil | würfelig, 1,5 x 1,5 x 1,5 mm | gut | gut |
| 2 | prakt. kein Feinanteil | würfelig 1,4 x 1,4x 1,4 mm | sehr gut | sehr gut |
| 3 | prakt. kein Feinanteil | würfelig, 1,5 x 1,5 x 1,5 mm | gut | sehr gut |
| 4 | prakt. kein Feinanteil | würfelig; 1,4 x 1,4 x 1,4 mm | sehr gut | sehr gut |
| 5 | prakt. kein Feinanteil | prismatisch, 1,4 x 1,4 x 0,5 mm | sehr gut | gut |
| 6 | prakt. kein Feinanteil | prismatisch, 1,4 x 1,4 x 5 mm | sehr gut | sehr gut |
| 7 | prakt. kein Feinanteil | würfelig; 3 x 3 x 3 mm | sehr gut | sehr gut |
| 8 | prakt. kein Feinanteil | würfelig; 1,4 x 1,4 x 1,4 mm | sehr gut | sehr gut |
| 9 | prakt. kein Feinanteil | würfelig, 1,5 x 1,5 x 1,5 mm | gut | gut |
| 10 | prakt. kein Feinanteil | prismatisch 1,5 x 1,5 x 2 | gut | gut |
| 11 | prakt. kein Feinanteil | prismatisch 1,4 x 1,4 x 2 | gut | gut |
| 12 Vergleichsbeispiel | undefinierte Korngröße, Produkt zerschert | sehr breite Kornverteilung von 20 µm bis 500 µm | sehr langsam | praktisch unfiltrierbar. |

## Patentansprüche

1. Vorrichtung zum definierten Zerkleinern von Polymerisatgelen, **dadurch gekennzeichnet, dass** sie aus
a. einem statischen Schneidelement, bestehend aus gitterförmig angeordneten gegebenenfalls unterstützten, vorgespannten Drähten, Stäben, Fasern, Geweben, Matrizen oder Profilen,
b. einem dynamischen Schneidelement zum Ablängen der mittels statischer Schneideeinheit erhaltenen Gelstränge oder -teilchen, bestehend aus einem oder mehreren gegebenenfalls unterstützten, geführten und gespannten Drähten oder Geweben und
c. einer Zuführungseinheit zur Zuführung des Polymerisatgels zu dem statischen Schneidelement im eingespannten, formstabilen Zustand, wobei die Zuführung sowohl diskontinuierlich oder kontinuierlich erfolgen kann,
aufgebaut ist.

2. Vorrichtung nach Anspruch 1, **dadurch gekennzeichnet, dass** die Drähte, Stäbe, Fasern, Gewebe, Matrize oder Profile des statischen Schneidelementes aus gegebenenfalls beschichtetem oder lackiertem, legierten oder unlegierten Stählen und Edelstählen, Eisen, Aluminium, Kupfer, Tantal oder aus Glas, Kohle; Keramik, Bor oder aus Polyethylen, Polypropylen, Polyestern, Polyamiden, Aramid, Polyetheretherketonen, Polysulfonen, Polytetrafluoethylen oder Cellulose bestehen.

3. Vorrichtung nach Anspruch 1, **dadurch gekennzeichnet, dass** die Drähte und Stäbe des statischen Schneidelementes eine rechteckige, quadratische, dreieckige, sechseckige oder runde Form bzw. Querschnitt aufweisen oder Kombinationen davon, wobei die Drähte und Stäbe gegebenenfalls ein- oder beidseitig abgeflacht oder angeschrägt sein können und der Durchmesser bzw. die Dicke der Drähte und Stäbe zwischen 0,05 und 10mm liegt.

4. Vorrichtung nach Anspruch 1, **dadurch gekennzeichnet, dass** die Drähte, Stäbe oder Fasern des statischen Schneielementes derart angeordnet sind, dass ein Gitter erhalten wird, bei welchem die Gitterzwischenräume dreieckig, quadratisch, rhomboedrisch, trapezförmig oder rechteckig sein können und eine Seitenlänge von 0,1 bis 200mm aufweisen.

5. Vorrichtung nach Anspruch 1, **dadurch gekennzeichnet, dass** bei Verwendung von Drähten oder Fasern für das statische Schneidelement die Drähte und Fasern vorgespannt werden.

6. Vorrichtung nach Anspruch 1, **dadurch gekennzeichnet, dass** das statische Schneidelement mit einer Unterstützungsvorrichtung in Form eines gegenseitig sich versteifenden Gitterrostes oder eines groben Drahtgewebes oder in Form eines Gitters, das auch als Siebgewebe ausgebildet sein kann, ausgestattet ist.

7. Vorrichtung nach Anspruch 1, **dadurch gekennzeichnet, dass** das dynamische Schneidelement aus einem oder mehreren geführten und gespannten Drähten oder Fasern oder aus Geweben, die zwecks Verbesserung der Einheitlichkeit der Teilchenlänge besonders bei großen Durchmessern, auch unterstützt bzw. geführt sein können, aus gegebenenfalls beschichtetem oder lackiertem, legierten oder unlegierten Stählen und Edelstählen, Eisen, Aluminium, Kupfer, Tantal oder aus Glas, Kohle, Keramik, Bor oder aus Polyethylen, Polypropylen, Polyestern, Polyamiden, Aramid, Polyetheretherketonen, Polysulfonen, Polytetrafluoethylen oder Cellulose besteht.

8. Vorrichtung nach Anspruch 1, **dadurch gekennzeichnet, dass** das dynamische Schneidelement als gespannter Einzeldraht ausgebildet ist, der als rotierender, segmentweise rotierender oder hin- und herbewegender Drahtbügel angeordnet ist oder aus gespannten Drähten, die in einem rotierenden Speichenrad mit Nabe oder in einem Gatterrahmen angeordnet sind, der sich im Betrieb hin und her bewegt oder aus einem grob gespannten Siebgewebe, das in einem Gatterrahmen hin- und herbewegt wird, besteht.

9. Vorrichtung nach Anspruch 1, **dadurch gekennzeichnet, dass** der Abstand zwischen statischem und dynamischen Schneidelement maximal 10mm beträgt.

10. Vorrichtung nach Anspruch 1, **dadurch gekennzeichnet, dass** die Zuführungseinheit aus einer verschließbaren Lade mit einer horizontalen Stempelauspressvorrichtung oder aus einem rohrförmigen Behälter mit abnehmbaren Deckel und Boden, in dem die Herstellung des Polymerisatgeles erfolgt, mit stehendem oder hängendem Pressstempel oder aus einem kontinuierlichem Rohrreaktor besteht.

11. Vorrichtung nach Anspruch 1, **dadurch gekennzeichnet, dass** die Vorrichtung aus
a) einem liegend angeordneten Pressstempel, einer Lade, einem statischen Schneidgitter und einem Schneidrad oder aus
b) einem stehend bzw. hängendem Pressstempel, einem Behälter in dem die Herstellung des Polymerisatgeles erfolgt, einem statischen Schneidgitter und der Gatterausführung des dynamischen Schneidelementes oder
c) für die kontinuierliche Ausführung aus einem kontinuierlichem Rohrreaktor mit statischem Schneidgitter, gegebenenfalls mit Unterstützungsgitterrost und einem Schneidrad oder
d) für die kontinuierliche Ausführung aus einem kontinuierlichem Rohrreaktor mit statischem Schneidgitter, gegebenenfalls mit Unterstützungsgitterrost und der Gatterausführung des dynamischen Schneidelementes
besteht.

12. Verfahren zur definierten Zerkleinerung von Polymerisatgelen, **dadurch gekennzeichnet ist, dass** das Polymerisatgel direkt nach der Polymerisation bzw. Vernetzung des Polymeren mit einer Vorrichtung gemäß Anspruch 1 zu Polymerisatgelteilchen einheitlicher Größe geschnitten wird.

13. Verfahren nach Anspruch 12, **dadurch gekennzeichnet, dass** wasserhaltige Polymerisatgele, aus der Gruppe der Acrylsäure-, Methacrylsäure-, Hydroxyethylmethacrylsäure- und Acrylamidhomopolymere bzw. deren Derivate, der Copolymere aus einem größeren Anteil an Acrylsäure-, Methacrylsäure-, Hydroxyethylmethacrylsäure- und Acrylamidderivaten und anderen copolymerisierbaren bzw. vernetzenden Monomeren, Polymerisatgele auf Basis nativer oder chemisch modifizierter Proteine, Polymerisatgele auf Basis von natürlichen bzw. chemisch modifizierten Homo- und Heteropolysacchariden, aus der Gruppe Stärke und Cellulose, Agarose, Carageenan, Chitosan, Xanthan, Guargum, Alginat, Pektinat, Saccharosegele, Polymerisatgele auf Basis von Polyelektrolyt-Komplexen, Polymerisatgele auf Basis hydrolysierter vernetzter Maleinsäureanhydrid-Copolymere oder N-bzw. Amino- oder Ammoniumgruppen-haltige Polymere mit kationischen Gruppen und geeigneten Gegenionen, die gegebenenfalls hydrophobe Gruppen enthalten können, geschnitten werden.

14. Verfahren nach Anspruch 12, **dadurch gekennzeichnet, dass** das Polymerisatgel durch die Zuführeinheit c) gemäß Anspruch 1 in einem formstabilen, eingespannten Zustand dem statischen Schneidelement a) gemäß Anspruch 1 zugeführt und mit einer bestimmten Vorschubgeschwindigkeit durch dieselbe gepresst wird, worauf die **dadurch** erhaltenen Gelstränge durch das dynamische Schneidelement in Abhängigkeit von der gewählten Schnittgeschwindigkeit in einheitliche Teilchen mit den gewünschten Dimensionen geschnitten wird.

15. Verfahren nach Anspruch 14, **dadurch gekennzeichnet, dass** das Verhältnis von Schnittgeschwindigkeit zu Vorschubgeschwindigkeit mindestens 2:1 beträgt.

16. Verfahren nach Anspruch 14, **dadurch gekennzeichnet, dass** die Zuführung des Polymerisatgeles zu den Schneidelementen über eine verschließbare Lade (2) mittels einer horizontalen Stempelauspressvorrichtung (1) erfolgt, wobei das Polymerisatgel zuerst grob in Blöcke vorgeschnitten wird, diese Blöcke dann in die Lade (2) chargiert werden, wobei mit einem Hebel der Vorderteil der Lade beim Befüllen vergrößert wird, sodass der Befüllvorgang der Lade **dadurch** erleichtert wird, die Lade sodann oben mit einem messerartigen Schieber verschlossen und der vordere Teil der Lade so weit vorgeschoben wird, dass eine leichte Seitenpressung entsteht, die die Vorwärtsbewegung des rechteckigen Pressstempels (1) nicht behindert, aber trotzdem ein abgeschlossener Raum gebildet wird, sodass die Gelpolymerisat-Blöcke **dadurch** im eingespannten, formstabilen Zustand den Schneidelementen zugeführt werden.

17. Verfahren nach Anspruch 14, **dadurch gekennzeichnet, dass** das Polymerisatgel aus einem rohrförmigen Behälter (6) mit abnehmbaren Deckel und Boden, in dem die Herstellung des Polymerisatgeles erfolgt, ausgepresst wird, wobei zuerst bei der Zuführung des Behälters zu den Schneideelementen der Deckel und dann der Boden entfernt wird, der Behälter auf einen Zentrierflansch, der zentrisch über dem statischen Schneidelement (7) angeordnet ist, geschoben und anschließend fixiert wird, sodann mittels eines Pressstempels (5), der zentriert in den Behälter mit der gewünschten Vorschubgeschwindigkeit eingebracht wird, durch das statische Schneidelement (7) gedrückt wird und durch das dynamische Schneidelement in einheitliche Teilchen mit den gewünschten Dimensionen geschnitten wird.

18. Verfahren nach Anspruch 12, **dadurch gekennzeichnet, dass** das Polymerisatgel zu einheitlichen prismatischen Teilchen oder zylindrischen Teilchen mit einer Länge der Prismen bzw. Zylinder von 0,1mm bis 100mm und einem Durchmesser von 0,1 bis 200mm geschnitten werden.

19. Verfahren nach Anspruch 12, **dadurch gekennzeichnet, dass** die geschnittenen Teilchen eine würfelige Form aufweisen oder ein Verhältnis von Prismen- oder Zylinderhöhe zu Prismen- oder Zylinderdurchmesser von 1:1 aufweisen.

## Claims

1. Apparatus for defined comminution of polymer gels, **characterized in that** it is constructed of
a. a static cutting element in the form of screen-shapedly disposed, optionally supported, pretensioned wires, rods, fibers, wovens, stencils or profiles,
b. a dynamic cutting element for shortening the gel strands or particles obtained by means of the static cutting unit, in the form of one or more optionally supported, guided and tensioned wires or wovens, and
c. a feed unit to feed the polymer gel to the static cutting element in a clamped-in, shape-stable state, the feeding being effected batchwise or continuously.

2. Apparatus according to Claim 1, **characterized in that** the wires, rods, fibers, wovens, stencils or profiles of the static cutting element are composed of optionally coated or otherwise surface-finished, alloyed or nonalloyed steels, including stainless steels, iron, aluminum, copper, tantalum or of glass, carbon, ceramic, boron or of polyethylene, polypropylene, polyesters, polyamides, aramid, polyetheretherketones, polysulfones, polytetrafluoroethylene or cellulose.

3. Apparatus according to Claim 1, **characterized in that** the wires and rods of the static cutting element have a rectangular, square, triangular, hexagonal or round shape or cross section or combinations thereof, the wires and rods being optionally flattened or beveled on one or both sides and the diameter or thickness of the wires and rods being between 0.05 and 10 mm.

4. Apparatus according to Claim 1, **characterized in that** the wires, rods or fibers of the static cutting element are disposed to form a screen in which the interspaces can be triangular, square, rhombohedral, trapezoidal or rectangular and are 0.1 to 200 mm in side length.

5. Apparatus according to Claim 1, **characterized in that** the wires or fibers of the static cutting element are pretensioned before use.

6. Apparatus according to Claim 1, **characterized in that** the static cutting element is equipped with a support in the form of a mutually stiffening grid or a coarse wire cloth or in the form of a screen which can also be configured as a screen fabric.

7. Apparatus according to Claim 1, **characterized in that** the dynamic cutting element is composed of one or more guided and tensioned wires or fibers or of wovens which, to improve the uniformity of the particle length especially in the case of large diameters, can also be supported or guided, of optionally coated or otherwise surface-finished, alloyed or nonalloyed steels, including stainless steels, iron, aluminum, copper, tantalum, or of glass, carbon, ceramic, boron or of polyethylene, polypropylene, polyesters, polyamides, aramid, polyetheretherketones, polysulfones, polytetrafluoroethylene or cellulose.

8. Apparatus according to Claim 1, **characterized in that** the dynamic cutting element is configured as a tensioned monowire which is disposed as a rotating, segmentally rotating or traversing wire hoop or composed of tensioned wires which are disposed in a rotating spoked wheel having a hub or in a grate frame which moves back and forth in operation or of a coarsely tensioned screen cloth which is moved back and forth in a grate frame.

9. Apparatus according to Claim 1, **characterized in that** the distance between the static and dynamic cutting elements is not more than 10 mm.

10. Apparatus according to Claim 1, **characterized in that** the feeding unit is composed of a closeable chest having a horizontal plunger press-out device or of a tubular container with a detachable lid and base, in which the production of the polymer gel is effected, with standing or hanging press plunger or of a continuous tubular reactor.

11. Apparatus according to Claim 1, **characterized in that** the apparatus is composed of
a) a horizontally disposed press plunger, a chest, a static cutting screen and a cutting wheel or of
b) a standing or hanging press plunger, a container in which the production of the polymer gel is effected, a static cutting screen and the grate embodiment of the dynamic cutting element or
c) for the continuous embodiment, of a continuous tubular reactor with static cutting screen, optionally with supporting grid and a cutting wheel or
d) for the continuous embodiment, of a continuous tubular reactor with a static cutting screen, optionally with supporting grid and the grate embodiment of the dynamic cutting element.

12. Process for defined comminution of polymer gels, **characterized in that** an apparatus according to Claim 1 is used to cut the polymer gel directly after polymerization or crosslinking of the polymer into polymer gel particles of uniform size.

13. Process according to Claim 12, **characterized in that** the polymer gel cut comprises water-containing polymer gels from the group of the acrylic acid, methacrylic acid, hydroxyethylmethacrylic acid and acrylamide homopolymers and their derivatives, the copolymers composed of a major fraction of acrylic acid, methacrylic acid, hydroxyethylmethacrylic acid and acrylamide derivatives and other copolymerizable or crosslinking monomers, polymer gels based on native or chemically modified proteins, polymer gels based on natural or chemically modified homo- and heteropolysaccharides from the group consisting of starch and cellulose, agarose, carageenan, chitosan, xanthan, guar gum, alginate, pectinate, sucrose gels, polymer gels based on polyelectrolyte complexes, polymer gels based on hydrolyzed crosslinked maleic anhydride copolymers or N- or amino- or ammonium-containing polymers with cationic groups and suitable counterions, which may optionally contain hydrophobic groups.

14. Process according to Claim 12, **characterized in that** the polymer gel is fed by the feeding unit c) as set forth in Claim 1 in a shape-stable, clamped state to the static cutting element a) as set forth in Claim 1 and is pressed therethrough at a certain forward feed speed, whereupon the resulting gel strands are cut by the dynamic cutting element, as a function of the chosen cutting speed, into uniform particles having the desired dimensions.

15. Process according to Claim 14, **characterized in that** the ratio of cutting speed to forward feed speed is at least 2:1.

16. Process according to Claim 14, **characterized in that** the feeding of the polymer gel to the cutting elements is effected via a closeable chest (2) by means of a horizontal plunger press-out device (1), the polymer gel first being precut coarsely into blocks, these blocks then being charged into the chest (2), a lever being used to enlarge the front part of the chest in the course of filling to facilitate the chest-filling operation, the chest then being sealed at the top by a bladelike slider and the front part of the chest being pushed forward to such an extent that there is a slight sideways press which does not impair the forward movement of the rectangular press plunger (1), yet a sealed-off space is formed nonetheless, whereby the gel polymer blocks are fed in a clamped-in, shape-stable state to the cutting elements.

17. Process according to Claim 14, **characterized in that** the polymer gel is pressed out of a tubular container (6) with detachable lid and base, in which the production of the polymer gel is effected, first, in the course of the feeding of the container to the cutting elements, the lid and then the base being removed, the container being pushed onto a centering flange which is centrically disposed above the static cutting element (7) and then fixed, then pushed through the static cutting element (7) by means of a press plunger (5) which is centeredly introduced into the container at the desired forward feed speed and is cut by the dynamic cutting element into uniform particles having the desired dimensions.

18. Process according to Claim 12, **characterized in that** the polymer gel is cut into uniform prismatic particles or cylindrical particles having a prism or cylinder length of 0.1 mm to 100 mm and a diameter of 0.1 to 200 mm.

19. Process according to Claim 12, **characterized in that** the cut particles have a cubic shape or a ratio of 1:1 for prism or cylinder height to prism or cylinder diameter.

## Revendications

1. Dispositif destiné au fractionnement défini de gels de polymère, **caractérisé en ce qu'**il est constitué
a. d'un élément de coupe statique constitué de fils métalliques, de barres, de fibres, de tissus, de matrices ou de profilés tendus préalablement, disposés en grille et, le cas échéant, pourvus d'un support,
b. d'un élément de coupe dynamique destiné à découper les boudins ou morceaux de gel obtenus au moyen de l'unité de coupe statique à la longueur souhaitée, ledit élément étant constitué d'un ou de plusieurs fils métalliques ou tissus tendus, guidés et, le cas échéant, pourvus d'un support, et
c. d'une unité d'alimentation servant à l'alimentation de l'élément de coupe statique en gel de polymère dans un état tendu garantissant une forme stable, ladite alimentation pouvant être réalisée d'une manière discontinue ou continue.

2. Dispositif selon la revendication 1, **caractérisé en ce que** lesdits fils métalliques, barres, fibres, tissus, matrices ou profilés de l'élément de coupe statique sont constitués d'aciers et d'aciers inoxydables, de fer, d'aluminium, de cuivre, de tantale alliés ou non-alliés et, le cas échéant, revêtus ou vernis ou bien de verre, de carbone, de céramique, de bore ou de polyéthylène, de polypropylène, de polyesters, de polyamides, d'aramide, de polyétheréthercétones, de polysulfones, de polytétrafluoroéthylène ou de cellulose.

3. Dispositif selon la revendication 1, **caractérisé en ce que** les fils métalliques et barres de l'élément de coupe statique présentent une forme et/ou une coupe transversale rectangulaire, carrée, triangulaire, hexagonale ou ronde ou des combinaisons des formes évoquées, les fils métalliques et barres pouvant, le cas échéant, être aplatis ou biseautés sur un ou deux de leurs côtés et le diamètre et/ou l'épaisseur des fils métalliques et des barres étant compris entre 0,05 et 10 mm.

4. Dispositif selon la revendication 1, **caractérisé en ce que** les fils métalliques, barres ou fibres dudit élément de coupe statique sont disposés tel qu'on obtient une grille dont les interstices peuvent être de forme triangulaire, carrée, rhomboédrique, trapézoïdale ou rectangulaire, leurs côtés présentant une longueur comprise entre 0,1 et 200 mm.

5. Dispositif selon la revendication 1, **caractérisé en ce que**, lorsqu'on utilise des fils métalliques ou des fibres pour l'élément de coupe statique, ces fils métalliques et fibres sont tendus préalablement.

6. Dispositif selon la revendication 1, **caractérisé en ce que** ledit élément de coupe statique est pourvu d'un dispositif de support sous forme d'une grille permettant une rigidification mutuelle ou d'un tissu en fil métallique de faible densité ou sous forme d'une grille pouvant également être réalisée comme toile de tamis.

7. Dispositif selon la revendication 1, **caractérisé en ce que** ledit élément de coupe dynamique est constitué d'un ou de plusieurs fils métalliques ou fibres guidés et tendus ou bien de tissus pouvant être également être pourvus d'un support ou d'un guidage afin d'améliorer l'homogénéité de la longueur des morceaux, notamment dans le cas de diamètres importants, lesdits fils métalliques ou tissus étant constitués d'aciers et d'aciers inoxydables, de fer, d'aluminium, de cuivre, de tantale alliés ou non-alliés et, le cas échéant, revêtus ou vernis ou bien de verre, de carbone, de céramique, de bore ou de polyéthylène, de polypropylène, de polyesters, de polyamides, d'aramide, de polyétheréthercétones, de polysulfones, de polytétrafluoroéthylène ou de cellulose.

8. Dispositif selon la revendication 1, **caractérisé en ce que** ledit élément de coupe dynamique étant réalisé comme simple fil métallique tendu qui est disposé de manière à ce qu'il forme un archet en fil métallique effectuant un mouvement rotatif par segment ou un mouvement de va et vient, ou comme fils métalliques tendus disposés dans une roue tournante pourvue de rayons et d'un moyeu ou dans un cadre pour dispositifs à lames multiples, ledit cadre fonctionnant par un mouvement de va et vient et étant constitué d'une toile de tamis tendue de faible densité qui effectue un mouvement de va et vient au sein dudit cadre.

9. Dispositif selon la revendication 1, **caractérisé en ce que** la distance entre lesdits éléments de coupe statique et dynamique ne dépasse pas 10 mm.

10. Dispositif selon la revendication 1, **caractérisé en ce que** ladite unité d'alimentation est constituée d'un bac chargeur fermable avec un dispositif de piston horizontal de vidage sous pression ou d'un récipient tubuleux avec un couvercle et un fond amovibles qui sert à la préparation du gel de polymère et qui est doté d'un piston travaillant à partir du bas ou du haut, ou d'un réacteur tubuleux fonctionnant en continu.

11. Dispositif selon la revendication 1, **caractérisé en ce que** ledit dispositif est constitué
a) d'un piston disposé horizontalement, d'un bac chargeur, d'une grille de coupe statique et d'une roue de coupe, ou
b) d'un piston travaillant du bas ou du haut, d'un récipient servant à la préparation du gel de polymère, d'une grille de coupe statique et d'un élément de coupe dynamique réalisé sous forme d'un dispositif à lames multiples, ou
c) pour le mode de réalisation à fonctionnement continu, d'un réacteur tubuleux fonctionnant en continu pourvu d'une grille de coupe statique, le cas échéant avec une grille de support, et d'une roue de coupe, ou
d) pour le mode de réalisation à fonctionnement continu, d'un réacteur tubuleux fonctionnant en continu pourvu d'une grille de coupe statique, le cas échéant avec une grille de support, et d'un élément de coupe dynamique réalisé sous forme d'un dispositif à lames multiples.

12. Procédé de fragmentation défini de gels de polymère, **caractérisé en ce que** ledit gel de polymère est coupé directement suite à la polymérisation et/ou la réticulation du polymère avec un dispositif selon la revendication 1 pour ainsi obtenir des morceaux de gel de polymère d'une taille homogène.

13. Procédé selon la revendication 12, **caractérisé en ce que** l'on coupe des gels de polymère contenant de l'eau et appartenant au groupe constitué par les homopolymères d'acide acrylique, d'acide méthacrylique, d'acide hydroxyéthylméthacrylique et d'acrylamide et/ou de leurs dérivés, les copolymères présentant une proportion élevée de dérivés d'acide acrylique, d'acide méthacrylique, d'acide hydroxyéthylméthacrylique et d'acrylamide et d'autres monomères aptes à la copolymérisation et/ou à la réticulation, des gels de polymère à base de protéines natives ou chimiquement modifiées, des gels de polymère à base d'homo- et d'hétéropolysaccharides naturels et/ou chimiquement modifiés appartenant au groupe constitué par l'amidon, la cellulose, l'agarose, le carraghénane, le chitosane, la gomme xanthane, la gomme de guar, l'alginate, le pectinate, les gels de saccharose, des gels de polymère à base de complexes de polyélectrolytes, des gels de polymère à base de copolymères d'anhydride maléique réticulés et hydrolysés ou des polymères contenant des motifs N-, amino ou ammonium avec des groupements cationiques et des contre-ions appropriés pouvant, le cas échéant, contenir des groupements hydrophobes.

14. Procédé selon la revendication 12, **caractérisé en ce que** le gel de polymère se trouve dans un état tendu garantissant une forme stable alors qu'il est acheminé, au moyen de l'unité d'alimentation c) selon la revendication 1, vers l'élément de coupe statique a) selon la revendication 1 pour ensuite être pressé à travers ce dernier avec une vitesse d'avancement définie, les boudins de gel ainsi obtenus étant alors coupés, au moyen de l'élément de coupe dynamique, en morceaux homogènes présentant les dimensions souhaitées en fonction de la vitesse de coupe choisie.

15. Procédé selon la revendication 14, **caractérisé en ce que** le rapport entre la vitesse de coupe et la vitesse d'avancement est d'au moins 2:1.

16. Procédé selon la revendication 14, **caractérisé en ce que** l'acheminement du gel de polymère vers les éléments de coupe est réalisé à travers un bac chargeur (2) fermable au moyen d'un dispositif de piston horizontal de vidage sous pression (1), le gel de polymère étant d'abord grossièrement coupé en blocs, lesdits blocs étant ensuite transférés dans le bac chargeur (2), la partie avant du bac chargeur étant élargie avec un levier lors de son remplissage pour ainsi faciliter les processus de remplissage dudit bac chargeur qui par la suite est fermé vers le haut avec un obturateur coulissant ressemblant à un couteau tout en avançant la partie avant du bac chargeur jusqu'à ce qu'une légère pression soit exercée par les parties latérales, ladite pression n'empêchant pas l'avancement du piston rectangulaire (1) mais suffisamment élevée pour créer un espace clos faisant en sorte que les blocs de gel de polymère soient acheminés vers les éléments de coupe dans un état tendu garantissant une forme stable.

17. Procédé selon la revendication 14, **caractérisé en ce que** le gel de polymère est sorti sous pression d'un récipient tubuleux (6) avec un couvercle et un fond amovibles qui sert à la préparation du gel de polymère, la première étape de l'acheminement dudit récipient vers les éléments de coupe consistant à enlever d'abord le couvercle puis le fond pour ensuite pousser le récipient sur une bride de centrage disposée en position centrale au-dessus de l'élément de coupe statique (7) puis l'y fixer, le passage sous pression à travers l'élément de coupe statique (7) étant ensuite effectué par un piston (5) qui est introduit dans le récipient de façon centrée et avec la vitesse d'avancement souhaitée, la découpe en morceaux homogènes présentant les dimensions souhaitées étant ensuite effectuée par l'élément de coupe dynamique.

18. Procédé selon la revendication 12, **caractérisé en ce que** le gel de polymère est coupé en morceaux homogènes de forme prismatique ou cylindrique, les prismes ou, respectivement, cylindres présentant une longueur comprise entre 0,1 mm et 100 mm et un diamètre compris entre 0,1 et 200 mm.

19. Procédé selon la revendication 12, **caractérisé en ce que** les morceaux coupés présentent une forme cubique ou un rapport de 1:1 entre la hauteur des prismes ou cylindres et le diamètre des prismes ou cylindres.
